Europäisches Patentamt

European Patent Office

Office européen des brevets

(11) Publication number:

**0 217 670**
**A2**

(12) **EUROPEAN PATENT APPLICATION**

(21) Application number: **86307624.6**

(22) Date of filing: **02.10.86**

(51) Int. Cl.⁴: **C 08 G 18/10**
**C 08 G 59/50, C 09 J 3/16**

(30) Priority: **02.10.85 IT 2233685**

(43) Date of publication of application:
**08.04.87 Bulletin 87/15**

(84) Designated Contracting States:
**AT BE CH DE FR GB LI NL SE**

(71) Applicant: **A.TE.CA. S.r.l.**
**31, Foro Buonaparte**
**Milan (IT)**

(72) Inventor: **Federici, Franco**
**49, viale Stelvio**
**I-21052 Busto Arsizio Varese (IT)**

**Pallozzi, Franco**
**18, via Duca degli Abruzzi**
**I-20059 Vimercate Milan (IT)**

**Cozzi, Ennio**
**2, via Novara**
**I-20020 Cantalupo Milan (IT)**

**Turco, Pietro**
**13, via Venezia**
**I-21052 Busto Arsizo, Varese (IT)**

(74) Representative: **Whalley, Kevin**
**MARKS & CLERK 57/60 Lincoln's Inn Fields**
**London WC2A 3LS (GB)**

(54) Monocomponent polyurethane adhesive and process for preparing the same.

㊗ Monocomponent polyurethane adhesive comprising the reaction product of a polyurethane resin, having a content of free isocyanic groups of from I.5 to 8, with a polyamine and an epoxy resin, wherein the ratio of the number of isocyanic groups of polyurethane resin/moles of polyamine is from 0.8 to I, and the ratio of the number of active hydrogen atoms of the polyamine/number of epoxy groups of the epoxy resin is higher than I, and a process for preparing the same.

EP 0 217 670 A2

## Description

MONOCOMPONENT POLYURETHANE ADHESIVE AND PROCESS FOR PREPARING THE SAME

This invention relates to a monocomponent polyurethane adhesive, and to a process for preparing the same. More particularly, the invention relates to a monocomponent polyurethane adhesive particularly suitable for use in the field of laminate materials.

As is known, laminates consist of two or more plastics films of the same or of different type, coupled or stuck together by means of an adhesive. Such laminates and in particular those intended for packaging of foodstuffs may incorporate a film covered on one side by a metal layer, such as aluminium or a thin sheet of aluminium or other metal to maintain the organoleptic properties (freshness, flavour, fragrance etc.) of the packed product, thus preserving it from air and moisture contact.

To stick the abovementioned films as adhesive is generally necessary which, besides having a long "pot-life", a good "green tack" and high cross-linking rate, exhibits a good resistance to heat and water. Furthermore. the adhesive must not be reactive with the materials of which the films are formed.

The adhesives used at the present generally have a restricted application field in that they do not simultaneously satisfy all the required properties. Thus, for instance, the polyurethane adhesives based on polyether-polyols have a good resistance to water but a poor tack, especially green tack, whereas polyurethane-polyester adhesives have an acceptable tack but a poor resistance to water.

We have found that a non-reactive adhesive, satisfying all the requirements for use with laminated materials and having a long pot-life, good green tack, high cross-linking rate as well as good resistance to temperature and water may be obtained in the form of a polyurethane adhesive according to the present invention, as defined below.

The present invention provides a polyurethane adhesive obtained by reacting a polyurethane resin, having a content of free isocyanic groups of from l.5 to 8, with a polyamine and with an epoxy resin. wherein the ratio of the number of isocyanic groups of polyurethane resin/moles of polyamine is from 0.8 to l, and the ratio of the number of active hydrogen atoms of the polyamine/number of epoxy groups of the epoxy resin is higher than l, and preferably from l.2 to 2.5, more preferably from l.5 to 2.

The polyurethane resin preferably contains a number of free NCO groups of from l.5 to 4.

According to a preferred embodiment, the non-reactive adhesive of the present invention comprises the reaction product between one mole of polyurethane resin, having a content of free NCO groups of from l.5 to 4, and two moles of a polyamine and an epoxy resin wherein the ratio between the number of active hydrogens of the polyamine and the number of epoxy groups of the resin is from l.5 to 2.

The adhesive of the present invention can be used as such or, preferably, as a solution. Suitable solvents for the preparation of the solution are alcohols, such as methyl, ethyl or propyl alcohol; esters, such as ethyl acetate, butyl acetate, and ethyl-glycol acetate; ketones, such as acetone and methyl-ethyl ketone; and ether, such as tetrahydrofuran and dioxane. Ethyl alcohol is particularly preferred because it is cheap and does not cause environmental pollution. Furthermore, ethyl alcohol neither attacks nor is absorbed by the film even when the latter is printed or painted with vinylidene thermoplastic resins or polyvinylalcohol. In applications in the field of laminated materials, ethyl alcohol is the preferred solvent in that it evaporates easily so that the content of residue solvent in the laminated material is very low.

For the preparation of the monocomponent adhesive of the present invention, the polyurethane resins obtained by reacting a polyisocyanate with a macroglycol can be suitably used. Macroglycols having a molecular weight of from 200 to l0,000, more preferably from 500 to 2,000, are preferably used. Examples of macroglycols are polkyalkylene glycols, saturated polyesters, polyethers, and polyesters-urethanes, etc. Examples of macroglycols which may be preferably used are: polyesters obtained by polycondensation of dicarboxylic acids or anhydrides, preferably aliphatic, containing from 4 to 9 carbon atoms, with aliphatic diols containing from 2 to 8 carbon atoms, alone or in admixture; polyesters obtained by polycondensation on diol "starters" of ε-caprolactone; the polyaddition products of the abovementioned polyesters with organic disocyanates in less than molar amounts; polyethyleneglycol; polypropyleneglycol; and the polymerization products of tetrahydrofuran.

These macroglycols may be used alone or mixed with small quantities of a low molecular weight polyol, preferably a trifunctional polyol, such as trimethylolpropane, glycerol, or l,2,6-hexane-triol.

The organic polyisocyanates useable can be either aromatic or aliphatic or cycloaliphatic; aromatic and cycloaliphatic polyisocyanates are preferred.

Examples of suitable polyisocyanates are: 2,4-toluenediisocyanate alone or mixed with the isomer 2.6-toluenediisocyanate; 4,4′-diphenylmethanediisocyanate; ethylene-diisocyanate; tetramethyl-diisocyanate; hexamethylene-diisocyanate; l,2-dodecan-diisocyanate; cyclo-butane-l,3-diisocyanate; cyclohexane l,3- and l,4-diisocyanate; 4,4′-dicyclohexyl-methane-diisocyanate; l-isocyanate-3-isocyanate-methyl-3,5,5-trimethylcyclohexane (or isoforon diisocyanate); and 2,2,4-trimethylhexamethylenediisocyanate mixed with the isomer 2,4,4-trimethylhexamethylenediisocyanate.

Any aliphatic, cycloaliphatic or heterocyclic polyamine containing from 2 to 6 amino groups can be used for the preparation of the monocomponent adhesive of the present invention. Some examples of polyamine which may be used are; ethylenediamine, diethylenetriamine, triethylenetetramine, propylenediamine, and tetraethylenepentamine.

As epoxy resin any glycidyl derivative of a polyphenol can be used. Typical epoxy resins are those obtained by reacting epichlorohydrin with bisphenol A, even if bisphenol A can be replaced by other phenols such as bisphenol F, novolacques, resorcinol, bis-(4-hydroxy-phenyl)-1,1-isobutane, amino-phenols, and aromatic diamines, and epichlorohydrin with other compounds acting as equivalent reactive sources of epoxy radicals.

Epoxy resins having an equivalent weight per epoxy oxygen of from 150 to 250, more preferably from 180 to 200, are preferred for the preparation of the monocomponent adhesive of the present invention.

For the preparation of the monocomponent polyurethane adhesive of the present invention, the following process is preferably carried out.

The reaction between the polyurethane resin and the polyamine is carried out in organic solution at room temperature, by adding the polyurethane resin to the polyamine. Suitable solvents are methyl, ethyl or propyl alcohol. To the reaction product, consisting of the polyurethane resin containing the amine group function, the epoxy resin is added and the mixture is heated at a temperature from 50°C to the boiling point of the solvent used, for a time from 30 minutes to 10 hours.

The thus obtained adhesive can be used as such or at a higher concentration.

The invention will be further described with reference to the following illustrative Examples. In the Examples all the parts, percentages and ratios are in weight, unless otherwise stated.

Example 1

Into a 1000 cc four-necked round-bottomed flask, equipped with a stirrer, dropping funnel, thermometer and reflux cooler, there were introduced 124.0 g of 2,6-toluenediisocyanate. The mixture was heated at 80°C and 450 g of propyleneglycol having a molecular weight equal to 1010 were added dropwise, within 1.5 hour. After heating at 100°C, the mixture was kept under stirring at this temperature for 12 hours.

150 g of ethyl acetate were added and the whole was then cooled to room temperature.

303.0 g of the obtained product were dissolved in 547.0 g of ethyl alcohol. The mixture was added within 20 minutes to a solution of 10.5 g of diethylenetriamine dissolved in 150.0 g of ethyl alcohol.

33.7 g of diglycylether of bisphenol A, having an equivalent weight of epoxy oxygen equal to 186, dissolved in 101 g of ethyl alcohol were then added. The whole was heated at 75°C and kept at this temperature for 1 hour.

The product has a dry residue of 27.5% and a pot ford 4 viscosity of 28 seconds, determined according to ASTM D 1200.

The solution of the thus obtained adhesive was applied to couple two films one of which was a bistretched polypropylene film and the other a non-stretched propylene-ethylene copolymer film.

The tack values of the adhesive are given in the following Table.

Example 2

Using the same apparatus as in Example 1, 157.0 g of 2,6-toluenediisocyanate were introduced and heated at 80°C and within 1.5 hours a mixture was added consisting of 136.0 g of polypropyleneglycol (M.W. = 426) and of 407.g of polypropyleneglycol (M.W. = 1010). The whole was heated at 100°C and kept at this temperature for 7 hours.

150 g of ethyl acetate were added and the mixture was cooled to room temperature.

303.6 g of the obtained product were dissolved in 546.4 g of ethyl alcohol and the mixture was added, within 20 minutes, to a solution of 16.0 g of diethylenetriamine, dissolved in 150.0 g of ethyl alcohol, at room temperature.

Thereafter, 57.5 g of diglycylether of bisphenol A, having an equivalent weight of epoxy oxygen equal to 186, dissolved in 171.5 g of ethyl alcohol were added. The whole was heated at 75°C for 1 hour.

The dry residue of the product was 25.65%; the pot ford 4 viscosity was 20 seconds.

The tack values of the adhesive are given in the Table.

Example 3

Into a 5000 cc round-bottomed flask, equipped with a stirrer, thermometer, dropping funnel and reflux cooler. 531.2 g of 2,6-toluenediisocyanate were introduced. The product was heated at 80°C and 2469.0 g of polypropyleneglycol (M.W. 1010) were added slowly, within 1.5 hour. The mixture was heated at 100°C and kept at this temperature for 2 hours.

639.3 g of ethyl acetate were added and after cooling to 60°C 3.0 g of dibutyltinlaurate were added as reaction catalyst. The mixture was kept at this temperature for 1 hour.

After having cooled to room temperature, 1456.0 g of the obtained product were dissolved in 2500.0 g of ethyl alcohol.

The mixture was added within 20 minutes to a solution containing 43.3 g of diethylenetriamine dissolved in 845.0 g of ethyl alcohol at room temperature.

153.5 g of diglycylether of bisphenol A, the equivalent weight of epoxy oxygen of which was 186, dissolved in 460.5 g. of ethyl alcohol were added followed by heating at 75°C for 1 hour.

The obtained product had a dry residue equal to 25.6%, and had a pot ford 4 viscosity corresponding to 17 seconds.

The tack values of the adhesive are given in the Table.

## TABLE

| Type of coupled material | Adhesive | Tack (g/15 min) | |
|---|---|---|---|
| 1) Bistretched polypropylene film/propylene-ethylene copolymer film (95/5) | 1 | green tack | 250 |
| | | after 9 days | 280 |
| 2) Bistretched polypropylene film/propylene-ethylene copolymer film (95/5) | 2 | green tack | 100 |
| | | after 8 days | 300 |
| 3) 0.01 mm aluminium sheet/ 0.01 mm aluminium sheet | 3 | green tack | 183 |
| | | after 5 days | 127 |
| | | after sterilization at 121°C for 30 minutes | 143 |
| 4) Polyethylene-polypropylene-polyethylene coextruded film/polyethylene-polypropylene-metallized polyethylene coextruded film | 3 | green tack | 10(1) |
| | | after 5 days | 38(1) |
| | | after sterilization at 121°C for 30 minutes | 52(1) |
| 5) Lacquered bistretched polypropylene film/propylene-ethylene copolymer film | 3 | green tack | 133 |
| | | after 5 days | 187 |
| | | after sterilization at 121°C for 30 minutes | .87 |
| 6) Bistretched polypropylene film/metallized and lacquered, bistretched polypropylene film | 3 | green tack | 67(1) |
| | | after 5 days | 62(1) |
| | | after sterilization at 121°C for 30 minutes | 145(1) |
| 7) Bistretched polypropylene film/propylene-ethylene copolymer film (95/5) | 3 | green tack | 147 |
| | | after 5 days | 198 |
| | | after sterilization at 121°C for 30 minutes | 93 |

(1) The metallic layer breaks off.

### Claims

1. A monocomponent polyurethane adhesive characterized by comprising the reaction product of a polyurethane resin, having a content of free isocyanic groups of from l.5 to 8, with a polyamine and an epoxy resin, wherein the ratio of the number of isocyanic groups of polyurethane resin/moles of polyamine is from 0.8 to l, and the ratio of the number of active hydrogen atoms of the polyamine/number of epoxy groups of the epoxy resin is higher than l.

2. A polyurethane adhesive as claimed in claim l, characterized in that the ratio of number of active hydrogen atoms of polyamine/number of epoxy groups of the epoxy resin is from l.2 to 2.5, preferably from l.5 to 2..

3. A polyurethane adhesive as claimed in claim l or 2, characterized in that the polyurethane resin contains a number of free NCO groups of from l.5 to 4.

4. A polyurethane adhesive as claimed in any of claims I to 3, characterized by comprising the reaction product of one mol of polyurethane resin, having a number of free NCO groups of from I.5 to 4, with two moles of a polyamine and with an epoxy resin, wherein the ratio between the number of active hydrogen atoms of the polyamine and the number of epoxy groups of the epoxy resin is from I.5 to 2.

5. A polyurethane adhesive as claimed in any of claims I to 4, characterized in that the polyurethane resin is obtained by reacting a polyisocyanate with a macroglycol having a molecular weight of from 200 to I0,000, preferably from 500 to 2,000.

6. A polyurethane adhesive as claimed in claim 5, characterized in that the polyisocyanate is an aromatic or cycloaliphatic polyisocyanate.

7. A polyurethane adhesive as claimed in any of claims I to 6, characterized in that the polyamine is an aliphatic, cycloaliphatic or heterocyclic polyamine and contains from 2 to 6 amino groups.

8. A polyurethane adhesive as claimed in any of claims I to 7, characterized in that the epoxy resin has an equivalent weight per epoxy oxygen of from I50 to 250.

9. A polyurethane adhesive as claimed in claim 8, characterized in that the epoxy resin has an equivalent weight per epoxy oxygen of from I80 to 200.

I0. A process for the preparation of a monocomponent polyurethane adhesive as claimed in any of claims I to 9, characterized by comprising the following steps:
- allowing the polyurethane resin and the polyamine to react in an organic solution and at room temperature;
- adding the epoxy resin to the thus obtained polyurethane resin containing amino groups; and
- heating the mixture at a temperature of from 50°C to the boiling point of the solvent, for a time from 30 minutes to I0 hours.

II. A process for preparing a monocomponent polyurethane adhesive, characterized by comprising reacting a polyurethane resin, having a content of free isocyanic groups of from I.5 to 8, with a polyamine and an epoxy resin, wherein the ratio of the number of isocyanic groups of polyurethane resin/moles of polyamine is from 0.8 to I, and the ratio of the number of active hydrogen atoms of the polyamine/number of epoxy groups of the epoxy resin is higher than I.